# EUROPEAN PATENT APPLICATION

(11) **EP 3 901 750 A1**
(43) Date of publication of application: **27.10.2021**
(21) Application number: 20198724.5
(22) Date of filing: 28.09.2020
(51) Int. Cl.: G06F 3/0481

(54) **METHOD AND DEVICE FOR DISPLAYING APPLICATION ICON, AND STORAGE MEDIUM**

(30) Priority: 26.04.2020 CN 202010339129
(71) Applicant: Beijing Xiaomi Mobile Software Co., Ltd., Beijing 100085 (CN)
(72) Inventor: LI, Jiayan, Beijing, Beijing 100085 (CN)
(74) Representative: dompatent von Kreisler Selting Werner - Partnerschaft von Patent- und Rechtsanwälten mbB

(57) **Abstract**

The present invention relates to a method and device for displaying application icon. The device includes a receiving unit (601) and a processing unit (602), the receiving unit (601) is adapted to receiving an operation on an application icon displayed on a display interface of the terminal, the processing unit (602) is adapted to determining and displaying a dynamic picture of the application icon according to the operation.

## Description

### TECHNICAL FIELD

The subject disclosure relates to the field of a terminal, and more particularly, to a method and device for displaying an application icon, and a storage medium.

### BACKGROUND

With the continuous development of the wireless technology, a virtual desktop is usually displayed on a screen, such as a terminal. A certain number of application icons are displayed on the virtual desktop. A user may execute software by selecting an application icon corresponding to the software.

At present, to improve effect of displaying an application icon in a screen, a depth appearance may be provided on an image surface using shadow technology to implement a dynamic visual effect of an image. Alternatively, dynamic display of an application icon may be implemented by deforming an image of the application icon. The appearance of the image of an application icon is not realistic, rendering the visual effect poor.

### SUMMARY

In view of this, embodiments herein provide a method and device for displaying an application icon, and a storage medium.

According to an aspect herein, a method for displaying an application icon is applicable to a terminal. The method includes:
receiving an operation on an application icon displayed on a display interface of the terminal; and
determining and displaying a dynamic picture of the application icon according to the operation.

An operation on an application icon displayed on a display interface of a terminal is received. An operation parameter of the operation on the application icon may be acquired. An image of the application icon may be controlled to move according to the operation parameter of the operation on the application icon. The effect of the actual operation on the application icon by the user is simulated, rendering display of the application icon three-dimensional and lifelike.

The application icon may include multiple layers. Each layer of the multiple layers may be a static image or a dynamic image.

Determining and displaying the dynamic picture of the application icon according to the operation may include: acquiring and displaying the dynamic picture of the application icon by processing, according to the operation, the multiple layers in the application icon for a dynamic effect.

Acquiring and displaying the dynamic picture of the application icon by processing, according to the operation, the multiple layers in the application icon for the dynamic effect may include: acquiring an operation parameter of the operation; determining, based on the operation parameter, a processing mode in which the multiple layers in the application icon are processed for the dynamic effect; and acquiring and displaying the dynamic picture of the application icon by processing the multiple layers in the processing mode.

The operation may include at least one of a moving operation, a clicking operation, a deleting operation, a put-at-top operation, an updating operation, or a fixing operation on the application icon.

The operation may include the moving operation of moving the application icon. Acquiring the dynamic picture of the application icon by processing, according to the operation, the multiple layers in the application icon for the dynamic effect may include: acquiring a moving speed at which the application icon is to be moved, and a moving direction along which the application icon is to be moved; and acquiring the dynamic picture of the application icon by moving the multiple layers in the application icon according to the moving speed and the moving direction.

Acquiring the dynamic picture of the application icon by moving the multiple layers in the application icon according to the moving speed and the moving direction may include: acquiring a moving parameter corresponding to a layer in the application icon, the moving parameter being determined based on a level of the layer; moving the layer in the application icon according to the moving parameter, the moving speed, and the moving direction; and displaying the application icon according to a trajectory of the layer in the application icon.

The operation may include the clicking operation on the application icon. Acquiring and displaying the dynamic picture of the application icon by processing, according to the operation, the multiple layers in the application icon for the dynamic effect may include: acquiring a location where the clicking operation is performed; and acquiring the dynamic picture of the application icon by expanding the multiple layers in the application icon outward starting from the location.

Acquiring the dynamic picture of the application icon by expanding the multiple layers in the application icon outward starting from the location may include: acquiring an expanding parameter corresponding to a layer in the application icon, the expanding parameter being determined based on a level of the layer; expanding, according to the expanding parameter, the layer in the application icon outward starting from the location; and displaying the application icon according to a trajectory of expansion of the layer in the application icon.

The operation may include the deleting operation of deleting the application icon. Acquiring and displaying the dynamic picture of the application icon by processing, according to the operation, the multiple layers in the application icon for the dynamic effect may include: acquiring a distance between a second application icon and the application icon according to the operation on the application icon; determining, based on the distance, starting times when respective layers in the second application icon start to move, and durations in which the respective layers in the second application icon move; and determining a dynamic picture of the second application icon according to the distance, the starting times, and the durations, the second application icon being another application icon displayed on the display interface of the terminal other than the application icon.

The method may further include: moving a layer in the application icon corresponding to the operation on the application icon. Determining the dynamic picture of the application icon may include: acquiring moving parameters corresponding to the respective layers in the second application icon, the moving parameters being determined based on respective levels of the respective layers in the second application icon; moving the respective layers in the second application icon respectively according to the moving parameters, the starting times, and the durations; and displaying the application icon according to a trajectory of the layer in the application icon.

According to an aspect herein, a device for displaying an application icon is applicable to a terminal. The device includes a receiving unit and a processing unit. The receiving unit is adapted to receiving an operation on an application icon displayed on a display interface of the terminal. The processing unit is adapted to determining and displaying a dynamic picture of the application icon according to the operation.

The advantages and technical effects of the device herein correspond to those of the method presented above.

The application icon may include multiple layers. Each layer of the multiple layers may be a static image or a dynamic image.

The processing unit may be adapted to determining and displaying the dynamic picture of the application icon according to the operation by: acquiring and displaying the dynamic picture of the application icon by processing, according to the operation, the multiple layers in the application icon for a dynamic effect.

The processing unit may be adapted to acquiring and displaying the dynamic picture of the application icon by processing, according to the operation, the multiple layers in the application icon for the dynamic effect, by: acquiring an operation parameter of the operation; determining, based on the operation parameter, a processing mode in which the multiple layers in the application icon are processed for the dynamic effect; and acquiring and displaying the dynamic picture of the application icon by processing the multiple layers in the processing mode.

The operation may include at least one of a moving operation, a clicking operation, a deleting operation, a put-at-top operation, an updating operation, or a fixing operation on the application icon.

The operation may include the moving operation of moving the application icon. The processing unit may be adapted to acquiring and displaying the dynamic picture of the application icon by processing, according to the operation, the multiple layers in the application icon for the dynamic effect, by: acquiring a moving speed at which the application icon is to be moved, and a moving direction along which the application icon is to be moved; and acquiring the dynamic picture of the application icon by moving the multiple layers in the application icon according to the moving speed and the moving direction.

The processing unit may be adapted to acquiring the dynamic picture of the application icon by moving the multiple layers in the application icon according to the moving speed and the moving direction, by: acquiring a moving parameter corresponding to a layer in the application icon, the moving parameter being determined based on a level of the layer; moving the layer in the application icon according to the moving parameter, the moving speed, and the moving direction; and displaying the application icon according to a trajectory of the layer in the application icon.

The operation may include the clicking operation on the application icon. The processing unit may be adapted to acquiring and displaying the dynamic picture of the application icon by processing, according to the operation, the multiple layers in the application icon for the dynamic effect, by: acquiring a location where the clicking operation is performed; and acquiring the dynamic picture of the application icon by expanding the multiple layers in the application icon outward starting from the location.

The processing unit may be adapted to acquiring the dynamic picture of the application icon by expanding the multiple layers in the application icon outward starting from the location, by: acquiring an expanding parameter corresponding to a layer in the application icon, the expanding parameter being determined based on a level of the layer; expanding, according to the expanding parameter, the layer in the application icon outward starting from the location; and displaying the application icon according to a trajectory of expansion of the layer in the application icon.

The operation may include the deleting operation of deleting the application icon. The processing unit may be adapted to acquiring and displaying the dynamic picture of the application icon by processing, according to the operation, the multiple layers in the application icon for the dynamic effect, by: acquiring a distance between a second application icon and the application icon according to the operation on the application icon; determining, based on the distance, starting times when respective layers in the second application icon start to move, and durations in which the respective layers in the second application icon move; and determining a dynamic picture of the second application icon according to the distance, the starting times, and the durations, the second application icon being another application icon displayed on the display interface of the terminal other than the application icon.

The processing unit may be further adapted to: moving a layer in the application icon corresponding to the operation on the application icon; and determining the dynamic picture of the application icon, by: acquiring moving parameters corresponding to the respective layers in the second application icon, the moving parameters being determined based on respective levels of the respective layers in the second application icon; moving the respective layers in the second application icon respectively according to the moving parameters, the starting times, and the durations; and displaying the application icon according to a trajectory of the layer in the application icon.

According to an aspect herein, a device for displaying an application icon includes a processor and memory. The memory is adapted to storing an instruction executable by the processor. The processor is adapted to implementing a method herein by calling the instruction.

The advantages and technical effects of the device herein correspond to those of the method presented above.

A method herein may be determined by computer program instructions.

According to an aspect herein, a transitory or non-transitory computer-readable storage medium or recording medium has stored thereon computer executable instructions which, when executed by a processor, implement a method herein by calling the instruction.

Said instructions can use any programming language and take the form of source code, object code or a code intermediate between source code and object code, such as a partially compiled form, or any other desirable form.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The above general description and detailed description below are but exemplary and explanatory, and do not limit the subject disclosure.

### BRIEF DESCRIPTION OF THE ACCOMPANYING DRAWINGS

Drawings here are incorporated in and constitute part of the specification, illustrate embodiments according to the subject disclosure, and together with the specification, serve to explain the principle of the subject disclosure.
FIG. 1 is a flow diagram of a method for displaying an application icon according to an exemplary embodiment.
FIG. 2 is a flow diagram of a method for displaying an application icon according to an exemplary embodiment.
FIG. 3 is a flow diagram of a method for displaying an application icon according to an exemplary embodiment.
FIG. 4 is a flow diagram of a method for displaying an application icon according to an exemplary embodiment.
FIG. 5 is a flow diagram of a method for displaying an application icon according to an exemplary embodiment.
FIG. 6 is a block diagram of a device for displaying an application icon according to an exemplary embodiment.
FIG. 7 is a block diagram of a device according to an exemplary embodiment.

### DETAILED DESCRIPTION

Exemplary embodiments (examples of which are illustrated in the accompanying drawings) are elaborated below. The following description refers to the accompanying drawings, in which identical or similar elements in two drawings are denoted by identical reference numerals unless indicated otherwise. Implementations set forth in the following exemplary embodiments do not represent all implementations in accordance with the subject disclosure. Rather, they are mere examples of the apparatus (i.e., device / equipment / terminal) and method in accordance with certain aspects of the subject disclosure as recited in the accompanying claims. The exemplary implementation modes may take on multiple forms, and should not be taken as being limited to examples illustrated herein. Instead, by providing such implementation modes, embodiments herein may become more comprehensive and complete, and comprehensive concept of the exemplary implementation modes may be delivered to those skilled in the art. Implementations set forth in the following exemplary embodiments do not represent all implementations in accordance with the subject disclosure. Rather, they are merely examples of the apparatus and method in accordance with certain aspects herein as recited in the accompanying claims.

A term used in an embodiment herein is merely for describing the embodiment instead of limiting the subject disclosure. A singular form "a" and "the" used in an embodiment herein and the appended claims may also be intended to include a plural form, unless clearly indicated otherwise by context. Further note that a term "and / or" used herein may refer to and contain any combination or all possible combinations of one or more associated listed items.

Note that although a term such as first, second, third may be adopted in an embodiment herein to describe various kinds of information, such information should not be limited to such a term. Such a term is merely for distinguishing information of the same type. For example, without departing from the scope of the embodiments herein, the first information may also be referred to as the second information. Similarly, the second information may also be referred to as the first information. Depending on the context, a "if' as used herein may be interpreted as "when" or "while" or "in response to determining that".

In addition, described characteristics, structures or features may be combined in one or more implementation modes in any proper manner. In the following descriptions, many details are provided to allow a full understanding of embodiments herein. However, those skilled in the art will know that the technical solutions of embodiments herein may be carried out without one or more of the details; alternatively, another method, component, device, option, etc., may be adopted. Under other conditions, no detail of a known structure, method, device, implementation, material or operation may be shown or described to avoid obscuring aspects of embodiments herein.

A block diagram shown in the accompanying drawings may be a functional entity which may not necessarily correspond to a physically or logically independent entity. Such a functional entity may be implemented in form of software, in one or more hardware modules or integrated circuits, or in different networks and /or processor devices and /or microcontroller devices.

A technical solution herein is applicable to a scene where an application icon in a display interface of a terminal is displayed according to an operation on the application icon. A terminal may sometimes be referred to as a smart terminal. The terminal may be a mobile terminal. The terminal may also be referred to as User Equipment (UE), a Mobile Station (MS), etc. A terminal may be equipment or a chip provided therein that provides a user with a voice and / or data connection, such as handheld equipment, onboard equipment, etc., with a wireless connection function. Examples of a terminal may include a mobile phone, a tablet computer, a notebook computer, a palm computer, a Mobile Internet Device (MID), wearable equipment, Virtual Reality (VR) equipment, Augmented Reality (AR) equipment, a wireless terminal in industrial control, a wireless terminal in unmanned drive, a wireless terminal in remote surgery, a wireless terminal in a smart grid, a wireless terminal in transportation safety, a wireless terminal in smart city, a wireless terminal in smart home, etc.

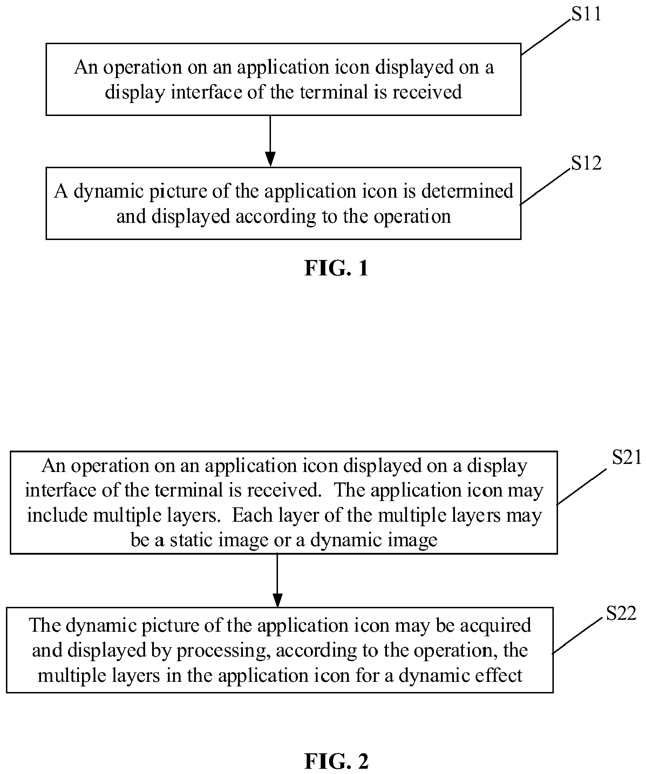

FIG. 1 is a flow diagram of a method for displaying an application icon according to an exemplary embodiment. As shown in FIG. 1, the method for displaying an application icon may be used in a terminal. The method includes an option as follows.

In S11, an operation on an application icon displayed on a display interface of the terminal is received.

An operation on an application icon on a display interface of a terminal by a user may be referred to as an application icon operation. An application icon operation may include at least one of a moving operation, a clicking operation, a deleting operation, a put-at-top operation, an updating operation, or a fixing operation on an application icon.

In S12, a dynamic picture of the application icon is determined and displayed according to the operation.

An operation parameter of an operation by a user on an application icon may be acquired according to the operation. An operation parameter may indicate a mode of operation by a user on an application icon, as well as an operation speed, an operation direction, an operation location, etc., of the user in the mode of operation. After an operation parameter of an operation on an application icon has been acquired, a dynamic picture of the application icon may be acquired by moving an image of the application icon according to the operation parameter of the operation on the application icon.

For example, a user may perform a moving operation of moving an application icon. A parameter indicating a moving speed at which the application icon is to be moved, a moving direction along which the application icon is to be moved, etc., may be acquired. A dynamic picture of the application icon may be acquired by moving an image of the application icon at a moving speed along a moving direction corresponding to the parameter acquired.

An operation on an application icon displayed on a display interface of a terminal is received. An operation parameter of the operation on the application icon may be acquired. An image of the application icon may be controlled to move according to the operation parameter of the operation on the application icon. The effect of the actual operation on the application icon by the user is simulated, rendering display of the application icon three-dimensional and lifelike.

An application icon may include one layer. Alternatively, an application icon may include multiple layers. The subject disclosure is elaborated below with an application icon including multiple layers.

FIG. 2 is a flow diagram of a method for displaying an application icon according to an exemplary embodiment. As shown in FIG. 2, the method for displaying an application icon may be used in a terminal. The method may include an option as follows.

In S21, an operation on an application icon displayed on a display interface of the terminal is received. The application icon may include multiple layers. Each layer of the multiple layers may be a static image or a dynamic image.

An application icon may include multiple layers. Each layer may be a static image or a dynamic image. A dynamic image may be an animation made according to a separate animation mechanism. When an operation on an application icon displayed on a display interface of a terminal is received, an animation internal to a layer in the application icon may be displayed according to a separate animation mechanism.

In S22, the dynamic picture of the application icon may be acquired and displayed by processing, according to the operation, the multiple layers in the application icon for a dynamic effect.

To simulate an effect of an actual operation on an application icon by a user and implement more lifelike three-dimensional display of the application icon, A dynamic picture of the application icon for the operation may be acquired and displayed by processing, according to the operation on the application icon by the user, the multiple layers in the application icon for a dynamic effect.

According to the operation on the application icon by the user, the multiple layers in the application icon may be processed for the dynamic effect exemplarily as follows.

An operation parameter of the operation on the application icon by the user may be acquired. A processing mode in which the multiple layers in the application icon are processed for the dynamic effect may be determined based on the operation parameter. The dynamic picture of the application icon may be acquired by processing the multiple layers in the processing mode in which the multiple layers in the application icon are processed for the dynamic effect.

For example, a user may perform a moving operation of moving an application icon. A moving parameter, including such as a moving speed, an upward moving direction, etc., according to which the user moves the application icon, may be collected through a sliding process of a touch gesture of the user. Based on the moving speed and the upward moving direction, a processing mode in which the multiple layers in the application icon are processed may be determined. That is, the multiple layers in the application icon may be moved upward. Moreover, each layer in the application icon may be moved upward based on the mode of moving the multiple layers in the application icon upward, acquiring the dynamic picture of the application icon.

An operation on a multi-layer application icon displayed on a display interface of a terminal is received. The multiple layers in the application icon are processed for a dynamic effect according to the operation on the application icon. The effect of the actual operation on the application icon by the user is simulated, rendering display of the application icon three-dimensional and lifelike.

Elaboration is given herein below as to how a dynamic picture of an application icon is acquired and displayed by processing, according to a received user operation on the application icon, multiple layers in the application icon for a dynamic effect.

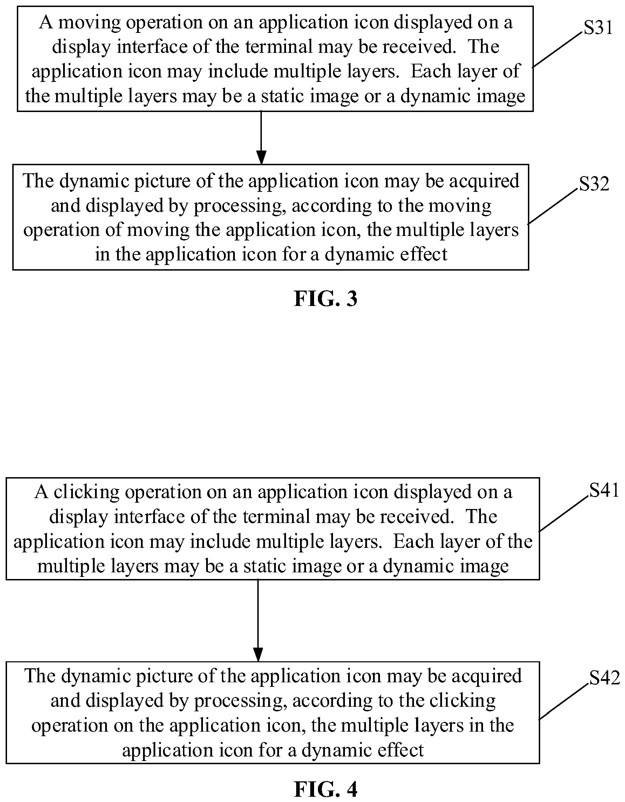

FIG. 3 is a flow diagram of a method for displaying an application icon according to an exemplary embodiment. As shown in FIG. 3, the method for displaying an application icon may be used in a terminal. The method may include an option as follows.

In S31, a moving operation on an application icon displayed on a display interface of the terminal may be received. The application icon may include multiple layers. Each layer of the multiple layers may be a static image or a dynamic image.

In S32, the dynamic picture of the application icon may be acquired and displayed by processing, according to the moving operation of moving the application icon, the multiple layers in the application icon for a dynamic effect.

A moving parameter for moving an application icon may be acquired according to a moving operation performed on the application icon by a user. For example, a moving speed at which the application icon is to be moved, and a moving direction along which the application icon is to be moved, may be acquired. The dynamic picture of the application icon may be acquired by moving the multiple layers in the application icon respectively according to the moving speed and the moving direction.

The dynamic picture of the application icon may be acquired by moving the multiple layers in the application icon according to the moving speed and the moving direction for moving the application icon, as follows.

A moving parameter corresponding to a layer in the application icon, namely a moving speed and a moving direction, may be acquired. The layer in the application icon may be moved according to the moving parameter corresponding to the layer, and the moving speed and the moving direction for moving the application icon. A moving parameter corresponding to a layer may be determined based on a level of the layer in an attribute of the layer. A level of a layer may indicate by how much the layer is to move.

For example, an application icon may include three layers. The first layer may be an image of a box. The second layer may be an image of a sphere. The third layer may be an image of a lid of the box. The first layer to the third layer may be of a level 3, a level 1, and a level 3, respectively. A user may perform a leftward moving operation on the application icon to move the application icon to the left. A speed at which a layer in the application icon is to be moved to the left, and the direction along which the layer is to be moved, may be acquired according to a level of the layer. Each layer in the application icon may be controlled to move according to a speed and a direction corresponding to the layer. That is, according to a speed and a direction for moving the application icon to the left, the first layer and the third layer may be controlled to move to the left at one speed, and the second layer may be controlled to move to the left at a speed less than that of the first layer and the third layer.

In addition, after a moving operation on the application icon has ended, an effect of dynamic return of a layer may be displayed according to an attribute of the layer. For example, the first layer and the third layer may return at a speed greater than that at which the second layer returns, thereby achieving scattered fall of different layers, resulting a visual effect of joint fall of different weights.

A moving operation on an application icon displayed on a display interface of a terminal is received. A layer in the application icon is controlled to move according to the moving operation on the application icon, a moving speed at which the application icon is to be moved, and a moving direction along which the application icon is to be moved. The application icon is displayed according to a trajectory of the layer in the application icon. The effect of the actual operation on the application icon by the user is simulated. A speed at which a layer moves is controlled according to a level of the layer, implementing lifelike three-dimensional display of the application icon.

FIG. 4 is a flow diagram of a method for displaying an application icon according to an exemplary embodiment. As shown in FIG. 4, the method for displaying an application icon may be used in a terminal. The method may include an option as follows.

In S41, a clicking operation on an application icon displayed on a display interface of the terminal may be received. The application icon may include multiple layers. Each layer of the multiple layers may be a static image or a dynamic image.

In S42, the dynamic picture of the application icon may be acquired and displayed by processing, according to the clicking operation on the application icon, the multiple layers in the application icon for a dynamic effect.

An operation parameter of a clicking operation may be acquired according to a location where a user performs the clicking operation on an application icon. That is, the location where the clicking operation is performed may be acquired. For example, the location may be an upper left corner of the application icon, a lower right corner of the application icon, a center location of the application icon, etc. The dynamic picture of the application icon may be acquired by expanding the multiple layers in the application icon outward starting from the location where the clicking operation is performed.

The dynamic picture of the application icon may be acquired by expanding the multiple layers in the application icon outward starting from the location as follows.

An expanding parameter corresponding to a layer in the application icon may be acquired. The expanding parameter may be determined based on a level of the layer. A level of a layer may indicate by how much the layer is to move. The layer in the application icon may be controlled, according to the expanding parameter, to expand outward starting from the location where the clicking operation is performed.

For example, for the application icon including the three layers, the operation on the application icon may be a click on the center location of the application icon. Acquired attributes of the first layer to the third layer may be the level 3, the level 1, and the level 3, respectively. An expanding parameter corresponding to a layer in the application icon may be acquired according to the level of the layer. The layer in the application icon may be controlled, according to the expanding parameter corresponding to the layer, to expand outward starting from the center location of the application icon. That is, according to the click on the center location of the application icon, the first layer and the third layer may be enlarged at one rate of expansion, and the second layer may be enlarged at a rate of expansion less than that of the first layer and the third layer.

An operation of a click on a location of an application icon is received. A layer in the application icon is controlled, according to the click on the location of the application icon, to expand based on an expanding parameter indicated by a level of the layer, showing an effect of animating the application icon, making display of the application icon more fun.

When a user operates an application icon, according to the operation on the application icon, a layer of a second application icon other than the application icon may be controlled to move according to a designated trajectory.

According to one or more of a deleting operation, a put-at-top operation, an updating operation, or a fixing operation performed on an application icon by a user, a layer of a second application icon on a display interface of a terminal may be controlled to move according to a designated trajectory. Elaboration is given herein below for an example where a user performs a deleting operation on an application icon.

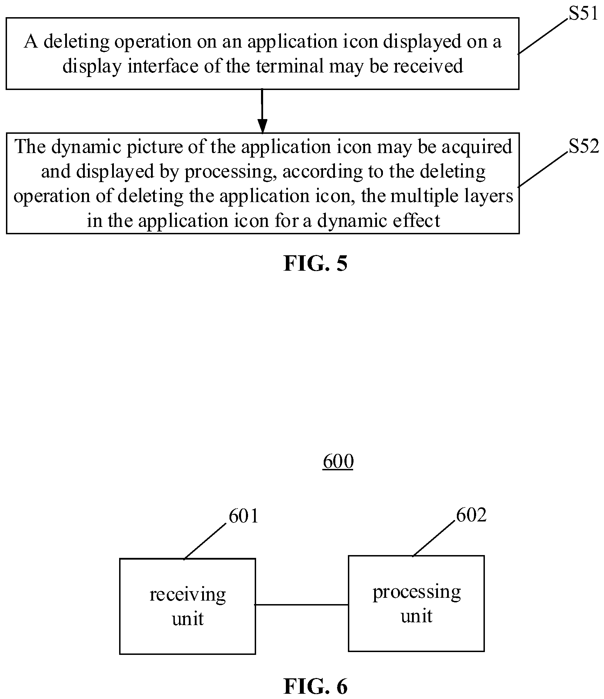

FIG. 5 is a flow diagram of a method for displaying an application icon according to an exemplary embodiment. As shown in FIG. 5, the method for displaying an application icon may be used in a terminal. The method may include an option as follows.

In S51, a deleting operation on an application icon displayed on a display interface of the terminal may be received.

An operation on an application icon displayed on a display interface of the terminal may include an operation of deleting the application icon. An application icon may include multiple layers.

In S52, the dynamic picture of the application icon may be acquired and displayed by processing, according to the deleting operation of deleting the application icon, the multiple layers in the application icon for a dynamic effect.

Herein for ease of description, an application icon to be deleted may be referred to as a (first) icon, and any application icon on the display interface of the terminal other than the (first) application icon may be referred to as a second application icon.

According to a deleting operation performed on an application icon by a user, a layer of a second application icon may be controlled to move according to a designated trajectory as follows.

A layer in the application icon may be controlled to move corresponding to the operation on the application icon. A layer of the second application icon may be controlled to move according to the designated trajectory.

A distance between the second application icon and the application icon may be acquired. A starting time when the second application icon starts to move, and a duration in which the second application icon moves, may be determined based on the distance between the second application icon and the application icon.

Therefore, in a scene of deleting an application icon, a layer in the application icon may be controlled to move corresponding to the deleting operation. A layer of a second application icon may be controlled to move according to a designated trajectory. Moreover, it may be preset that the closer a second application icon is to the application, the earlier and longer the second application icon may move.

A layer of the second application icon may be controlled to move according to a designated trajectory as follows.

Moving parameters corresponding to the respective layers in the second application icon may be acquired. The moving parameters may be determined based on respective levels of the respective layers in the second application icon. The respective layers in the second application icon may be controlled to move respectively according to the moving parameters, the starting times, and the durations.

For example, to delete an application icon, a layer in the application icon may move corresponding to a deleting operation. That is, each layer in the application icon may explode. A layer of a second application icon may move along a designated trajectory. For example, the layer of the second application icon may be ejected outward after the simulated explosion. The application icon may be displayed according to the trajectory of ejecting each layer in the second application icon outward.

A distance between the second application icon and the application icon may be acquired. A relationship between locations of the second application icon and the application icon may be determined. A starting time when the second application icon starts to move, and a duration in which the second application icon moves, may be determined according to the distance between the second application icon and the application icon as well as the relationship between the locations of the second application icon and the application icon. A direction in which the second application icon ejects outward may be determined. A level of a layer of the second application icon may be acquired. A level of a layer may indicate by how much the layer is to move. A moving parameter, for ejecting the layer of the second application icon outward at the moment the application icon explodes, may be acquired according to the level of the layer of the second application icon. Accordingly, a layer in the second application icon may be controlled to move according to a designated trajectory, starting at a designated starting time, and in a designated duration.

A deleting operation on an application icon is acquired. A layer of a second application icon displayed on a display interface of a terminal may be controlled to move along a designated trajectory. The application icon is displayed according to the designated trajectory of each layer of each second application icon. When a user performs a designated operation on an application icon, a real physical effect impacting a second application icon near the application icon may be simulated according to how the application icon moves, enriching display of an application icon.

Based on one inventive idea, embodiments herein further provide a device for displaying an application icon.

Understandably, a device for controlling an APP according to one or more embodiments herein may include a hardware structure and / or a software module for implementing a function herein. Combining an exemplary unit as well as an exemplary algorithm step disclosed herein, embodiments herein may be implemented by hardware or a combination of hardware and computer software. Whether a function is implemented by hardware or by computer software driven hardware may depend on a specific application of a technical solution as well as a design constraint. Depending on a specific application, a person having ordinary skill in the art may implement a described function using different methods. Such implementation however should not be deemed going beyond a scope of a technical solution herein.

FIG. 6 is a block diagram of a device 600 for displaying an application icon according to an exemplary embodiment. Referring to FIG. 6, the device for displaying an application icon may be used in a terminal. The device for displaying an application icon includes a receiving unit 601 and a processing unit 602.

The receiving unit 601 may be adapted to receiving an operation on an application icon displayed on a display interface of the terminal. The processing unit 602 may be adapted to determining and displaying a dynamic picture of the application icon according to the operation.

The application icon may include multiple layers. Each layer of the multiple layers may be a static image or a dynamic image.

The processing unit 602 may be adapted to determining and displaying the dynamic picture of the application icon according to the operation by acquiring and displaying the dynamic picture of the application icon by processing, according to the operation, the multiple layers in the application icon for a dynamic effect.

The processing unit 602 may be adapted to acquiring and displaying the dynamic picture of the application icon by processing, according to the operation, the multiple layers in the application icon for the dynamic effect, by: acquiring an operation parameter of the operation; determining, based on the operation parameter, a processing mode in which the multiple layers in the application icon are processed for the dynamic effect; and acquiring and displaying the dynamic picture of the application icon by processing the multiple layers in the processing mode.

The operation may include at least one of a moving operation, a clicking operation, a deleting operation, a put-at-top operation, an updating operation, or a fixing operation on the application icon.

The operation may include the moving operation of moving the application icon. The processing unit 602 may be adapted to acquiring and displaying the dynamic picture of the application icon by processing, according to the operation, the multiple layers in the application icon for the dynamic effect, by: acquiring a moving speed at which the application icon is to be moved, and a moving direction along which the application icon is to be moved; and acquiring the dynamic picture of the application icon by moving the multiple layers in the application icon according to the moving speed and the moving direction.

The processing unit 602 may be adapted to acquiring the dynamic picture of the application icon by moving the multiple layers in the application icon according to the moving speed and the moving direction, by: acquiring a moving parameter corresponding to a layer in the application icon, the moving parameter being determined based on a level of the layer; moving the layer in the application icon according to the moving parameter, the moving speed, and the moving direction; and displaying the application icon according to a trajectory of the layer in the application icon.

The operation may include the clicking operation on the application icon. The processing unit 602 may be adapted to acquiring and displaying the dynamic picture of the application icon by processing, according to the operation, the multiple layers in the application icon for the dynamic effect, by: acquiring a location where the clicking operation is performed; and acquiring the dynamic picture of the application icon by expanding the multiple layers in the application icon outward starting from the location.

The processing unit 602 may be adapted to acquiring the dynamic picture of the application icon by expanding the multiple layers in the application icon outward starting from the location, by: acquiring an expanding parameter corresponding to a layer in the application icon, the expanding parameter being determined based on a level of the layer; expanding, according to the expanding parameter, the layer in the application icon outward starting from the location; and displaying the application icon according to a trajectory of expansion of the layer in the application icon.

The operation may include the deleting operation of deleting the application icon. The processing unit 602 may be adapted to acquiring and displaying the dynamic picture of the application icon by processing, according to the operation, the multiple layers in the application icon for the dynamic effect, by: acquiring a distance between a second application icon and the application icon according to the operation on the application icon; determining, based on the distance, starting times when respective layers in the second application icon start to move, and durations in which the respective layers in the second application icon move; and determining a dynamic picture of the second application icon according to the distance, the starting times, and the durations. A second application icon may be another application icon displayed on the display interface of the terminal other than the application icon.

The processing unit 602 may further be adapted to moving a layer in the application icon corresponding to the operation on the application icon, and determining the dynamic picture of the application icon, by: acquiring moving parameters corresponding to the respective layers in the second application icon, the moving parameters being determined based on respective levels of the respective layers in the second application icon; moving the respective layers in the second application icon respectively according to the moving parameters, the starting times, and the durations; and displaying the application icon according to a trajectory of the layer in the application icon.

A module of the device according to at least one embodiment herein may perform an operation in a mode elaborated in at least one embodiment of the method herein, which will not be repeated here.

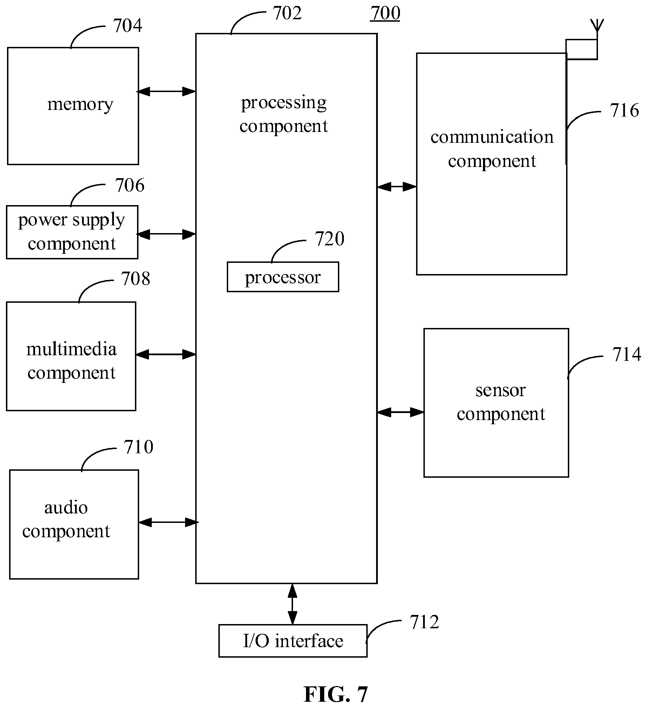

FIG. 7 is a block diagram of a device 700 for displaying an application icon according to an exemplary embodiment. For example, the device 700 may be a mobile phone, a computer, a digital broadcasting terminal, a message transceiver, a game console, a tablet device, a medical device, a fitness device, a Personal Digital Assistant (PDA), etc.

Referring to FIG. 7, the device 700 may include one or more of a processing component 702, memory 704, a power supply component 706, a multimedia component 708, an audio component 710, an Input / Output (I / O) interface 712, a sensor component 714, and a communication component 716.

The processing component 702 generally controls an overall operation of the device 700, such as operations associated with display, a telephone call, data communication, a camera operation, and a recording operation. The processing component 702 may include one or more processors 720 to execute instructions so as to complete all or some options of the method. In addition, the processing component 702 may include one or more modules to facilitate interaction between the processing component 702 and other components. For example, the processing component 702 may include a multimedia module to facilitate interaction between the multimedia component 708 and the processing component 702.

The memory 704 may be configured for storing various types of data to support the operation on the device 700. Example of such data may include instructions of any application or method configured for operating on the device 700, contact data, phonebook data, messages, pictures, videos, and/or the like. The memory 704 may be realized by any type of transitory or non-transitory storage equipment or combination thereof, such as Static Random Access Memory (SRAM), Electrically Erasable Programmable Read-Only Memory (EEPROM), Erasable Programmable Read-Only Memory (EPROM), Programmable Read-Only Memory (PROM), Read-Only Memory (ROM), magnetic memory, flash memory, magnetic disk, or compact disk.

The power supply component 706 may supply electric power to various components of the device 700. The power supply component 706 may include a power management system, one or more power sources, and other components related to generating, managing and distributing electricity for the device 700.

The multimedia component 708 may include a screen providing an output interface between the device 700 and a user. The screen may include a Liquid Crystal Display (LCD) and a Touch Panel (TP). If the screen includes a TP, the screen may be realized as a touch screen to receive an input signal from a user. The TP may include one or more touch sensors for sensing touch, slide and gestures on the TP. The touch sensors not only may sense the boundary of a touch or slide move, but also detect the duration and pressure related to the touch or slide move. The multimedia component 708 may include a front camera and/or a rear camera. When the device 700 is in an operation mode such as a shooting mode or a video mode, the front camera and/or the rear camera may receive external multimedia data. Each of the front camera and the rear camera may be a fixed optical lens system or may have a focal length and be capable of optical zooming.

The audio component 710 may be configured for outputting and/or inputting an audio signal. For example, the audio component 710 may include a microphone (MIC). When the device 700 is in an operation mode such as a call mode, a recording mode, and a voice recognition mode, the MIC may be configured for receiving an external audio signal. The received audio signal may be further stored in the memory 704 or may be sent via the communication component 716. The audio component 710 may further include a loudspeaker configured for outputting the audio signal.

The I / O interface 712 may provide an interface between the processing component 702 and a peripheral interface module. Such a peripheral interface module may be a keypad, a click wheel, a button or the like. Such a button may include but is not limited to: a homepage button, a volume button, a start button, and a lock button.

The sensor component 714 may include one or more sensors for assessing various states of the device 700. For example, the sensor component 714 may detect an on/off state of the device 700 and relative positioning of components such as the display and the keypad of the device 700. The sensor component 714 may further detect a change in the position of the device 700 or of a component of the device 700, whether there is contact between the device 700 and a user, the orientation or acceleration/deceleration of the device 700, and a change in the temperature of the device 700. The sensor component 714 may include a proximity sensor configured for detecting existence of a nearby object without physical contact. The sensor component 714may further include an optical sensor such as a Complementary Metal-Oxide-Semiconductor (CMOS) or Charge-Coupled-Device (CCD) image sensor used in an imaging application. The sensor component 714 may further include an acceleration sensor, a gyroscope sensor, a magnetic sensor, a pressure sensor, a microwave sensor, or a temperature sensor.

The communication component 716 may be configured for facilitating wired or wireless communication between the device 700 and other equipment. The device 700 may access a wireless network based on a communication standard such as WiFi, 2G or 3G, or combination thereof. The communication component 716 may receive a broadcast signal or broadcast related information from an external broadcast management system via a broadcast channel. The communication component 716 may further include a Near Field Communication (NFC) module for short-range communication. For example, the NFC module may be based on Radio Frequency Identification (RFID), Infrared Data Association (IrDA), Ultra-Wideband (UWB) technology, Bluetooth (BT), and other technologies.

The device 700 may be realized by one or more of Application Specific Integrated Circuits (ASIC), Digital Signal Processors (DSP), Digital Signal Processing Device (DSPD), Programmable Logic Devices (PLD), Field Programmable Gate Arrays (FPGA), controllers, microcontrollers, microprocessors or other electronic components to implement the method.

A transitory or non-transitory computer-readable storage medium including instructions, such as memory 704 including instructions, may be provided. The instructions may be executed by the processor 720 of the device 700 to implement the method. For example, the transitory or non-transitory computer-readable storage medium may be a Read-Only Memory (ROM), a Compact Disc Read-Only Memory (CD-ROM), a magnetic tape, a floppy disk, optical data storage equipment, etc.

A computer-readable storage medium, having stored thereon computer executable instructions which, when executed by a processor, implement a method herein.

Further note that herein by "multiple", it may mean two or more. Other quantifiers may have similar meanings. A term "and / or" may describe an association between associated objects, indicating three possible relationships. For example, by A and / or B, it may mean that there may be three cases, namely, existence of but A, existence of both A and B, or existence of but B. A slash mark "/" may generally denote an "or" relationship between two associated objects that come respectively before and after the slash mark. Singulars "a/an", "said" and "the" are intended to include the plural form, unless expressly illustrated otherwise by context.

Further note that although a term such as first, second, etc., may be adopted to describe various kinds of information, such information should not be limited to such a term. Such a term is merely for distinguishing information of the same type, without indicating any specific order or degree of importance. In fact, expressions such as "first", "second", etc., are completely interchangeable in usage. For example, without departing from the scope of embodiments herein, first information may also be referred to as second information. Similarly, second information may also be referred to as first information.

Further note that although in drawings herein operations are described in a specific order, it should not be construed as that the operations have to be performed in the specific order or sequence, or that any operation shown has to be performed in order to acquire an expected result. Under a specific circumstance, multitask and parallel processing may be advantageous.

Other implementations of the subject disclosure will be apparent to a person having ordinary skill in the art that has considered the specification and or practiced the subject disclosure. The subject disclosure is intended to cover any variation, use, or adaptation of the subject disclosure following the general principles of the subject disclosure and including such departures from the subject disclosure as come within common knowledge or customary practice in the art. The specification and the embodiments are intended to be exemplary only, with a true scope of the subject disclosure being indicated by the appended claims.

Note that the subject disclosure is not limited to the exact construction that has been described above and illustrated in the accompanying drawings, and that various modifications and changes may be made to the subject disclosure without departing from the scope of the subject disclosure. It is intended that the scope of the subject disclosure is limited only by the appended claims.

## Claims

1. A method for displaying an application icon, applicable to a terminal, the method comprising:
receiving an operation on an application icon displayed on a display interface of the terminal (S11, S21); and
determining and displaying a dynamic picture of the application icon according to the operation (S12).

2. The method of claim 1, wherein the application icon comprises multiple layers, wherein each layer of the multiple layers is a static image or a dynamic image.

3. The method of claim 2, wherein determining and displaying the dynamic picture of the application icon according to the operation comprises:
acquiring and displaying the dynamic picture of the application icon by processing, according to the operation, the multiple layers in the application icon for a dynamic effect (S22).

4. The method of claim 3, wherein acquiring and displaying the dynamic picture of the application icon by processing, according to the operation, the multiple layers in the application icon for the dynamic effect comprises:
acquiring an operation parameter of the operation;
determining, based on the operation parameter, a processing mode in which the multiple layers in the application icon are processed for the dynamic effect; and
acquiring and displaying the dynamic picture of the application icon by processing the multiple layers in the processing mode.

5. The method of any one of claims 1 to 4, wherein the operation comprises at least one of a moving operation, a clicking operation, a deleting operation, a put-at-top operation, an updating operation, or a fixing operation on the application icon.

6. The method of claim 5, wherein the operation comprises the moving operation of moving the application icon, wherein acquiring the dynamic picture of the application icon by processing, according to the operation, the multiple layers in the application icon for the dynamic effect comprises:
acquiring a moving speed at which the application icon is to be moved, and a moving direction along which the application icon is to be moved; and
acquiring the dynamic picture of the application icon by moving the multiple layers in the application icon according to the moving speed and the moving direction.

7. The method of claim 6, wherein acquiring the dynamic picture of the application icon by moving the multiple layers in the application icon according to the moving speed and the moving direction comprises:
acquiring a moving parameter corresponding to a layer in the application icon, the moving parameter being determined based on a level of the layer;
moving the layer in the application icon according to the moving parameter, the moving speed, and the moving direction; and
displaying the application icon according to a trajectory of the layer in the application icon.

8. The method of claim 5, wherein the operation comprises the clicking operation on the application icon, wherein acquiring the dynamic picture of the application icon by processing, according to the operation, the multiple layers in the application icon for the dynamic effect comprises:
acquiring a location where the clicking operation is performed; and
acquiring the dynamic picture of the application icon by expanding the multiple layers in the application icon outward starting from the location.

9. The method of claim 8, wherein acquiring the dynamic picture of the application icon by expanding the multiple layers in the application icon outward starting from the location comprises:
acquiring an expanding parameter corresponding to a layer in the application icon, the expanding parameter being determined based on a level of the layer;
expanding, according to the expanding parameter, the layer in the application icon outward starting from the location; and
displaying the application icon according to a trajectory of expansion of the layer in the application icon.

10. The method of claim 5, wherein the operation comprises the deleting operation of deleting the application icon, wherein acquiring and displaying the dynamic picture of the application icon by processing, according to the operation, the multiple layers in the application icon for the dynamic effect comprises:
acquiring a distance between a second application icon and the application icon according to the operation on the application icon;
determining, based on the distance, starting times when respective layers in the second application icon start to move, and durations in which the respective layers in the second application icon move; and
determining a dynamic picture of the second application icon according to the distance, the starting times, and the durations, the second application icon being another application icon displayed on the display interface of the terminal other than the application icon.

11. The method of claim 10, further comprising:
moving a layer in the application icon corresponding to the operation on the application icon,
wherein determining the dynamic picture of the application icon comprises:
acquiring moving parameters corresponding to the respective layers in the second application icon, the moving parameters being determined based on respective levels of the respective layers in the second application icon;
moving the respective layers in the second application icon respectively according to the moving parameters, the starting times, and the durations; and
displaying the application icon according to a trajectory of the layer in the application icon.

12. A device for displaying an application icon, the device comprising a receiving unit (601) and a processing unit (602),
wherein the receiving unit (601) is adapted to receiving an operation on an application icon displayed on a display interface of the terminal,
wherein the processing unit (602) is adapted to determining and displaying a dynamic picture of the application icon according to the operation.

13. The device of claim 12, wherein the application icon comprises multiple layers, wherein each layer of the multiple layers is a static image or a dynamic image,
optionally, wherein the processing unit (602) is adapted to determining and displaying the dynamic picture of the application icon according to the operation by:
acquiring and displaying the dynamic picture of the application icon by processing, according to the operation, the multiple layers in the application icon for a dynamic effect,
optionally, wherein the processing unit (602) is adapted to acquiring and displaying the dynamic picture of the application icon by processing, according to the operation, the multiple layers in the application icon for the dynamic effect, by:
acquiring an operation parameter of the operation;
determining, based on the operation parameter, a processing mode in which the multiple layers in the application icon are processed for the dynamic effect; and
acquiring and displaying the dynamic picture of the application icon by processing the multiple layers in the processing mode.

14. The device of any one of claims 12 to 13, wherein the operation comprises at least one of a moving operation, a clicking operation, a deleting operation, a put-at-top operation, an updating operation, or a fixing operation on the application icon,
optionally, wherein the operation comprises the moving operation of moving the application icon, wherein the processing unit (602) is adapted to acquiring and displaying the dynamic picture of the application icon by processing, according to the operation, the multiple layers in the application icon for the dynamic effect, by:
acquiring a moving speed at which the application icon is to be moved, and a moving direction along which the application icon is to be moved; and
acquiring the dynamic picture of the application icon by moving the multiple layers in the application icon according to the moving speed and the moving direction,
optionally, wherein the processing unit (602) is adapted to acquiring the dynamic picture of the application icon by moving the multiple layers in the application icon according to the moving speed and the moving direction, by:
acquiring a moving parameter corresponding to a layer in the application icon, the moving parameter being determined based on a level of the layer;
moving the layer in the application icon according to the moving parameter, the moving speed, and the moving direction; and
displaying the application icon according to a trajectory of the layer in the application icon,
optionally, wherein the operation comprises the clicking operation on the application icon, wherein the processing unit (602) is adapted to acquiring and displaying the dynamic picture of the application icon by processing, according to the operation, the multiple layers in the application icon for the dynamic effect, by:
acquiring a location where the clicking operation is performed; and
acquiring the dynamic picture of the application icon by expanding the multiple layers in the application icon outward starting from the location,
optionally, wherein the processing unit (602) is adapted to acquiring the dynamic picture of the application icon by expanding the multiple layers in the application icon outward starting from the location, by:
acquiring an expanding parameter corresponding to a layer in the application icon, the expanding parameter being determined based on a level of the layer;
expanding, according to the expanding parameter, the layer in the application icon outward starting from the location; and
displaying the application icon according to a trajectory of expansion of the layer in the application icon,
optionally, wherein the operation comprises the deleting operation of deleting the application icon, wherein the processing unit (602) is adapted to acquiring and displaying the dynamic picture of the application icon by processing, according to the operation, the multiple layers in the application icon for the dynamic effect, by:
acquiring a distance between a second application icon and the application icon according to the operation on the application icon;
determining, based on the distance, starting times when respective layers in the second application icon start to move, and durations in which the respective layers in the second application icon move; and
determining a dynamic picture of the second application icon according to the distance, the starting times, and the durations, the second application icon being another application icon displayed on the display interface of the terminal other than the application icon,
optionally, wherein the processing unit (602) is further adapted to:
moving a layer in the application icon corresponding to the operation on the application icon; and
determining the dynamic picture of the application icon, by:
acquiring moving parameters corresponding to the respective layers in the second application icon, the moving parameters being determined based on respective levels of the respective layers in the second application icon;
moving the respective layers in the second application icon respectively according to the moving parameters, the starting times, and the durations; and
displaying the application icon according to a trajectory of the layer in the application icon.

15. A computer-readable storage medium, having stored thereon computer executable instructions which, when executed by a processor, implement the method of any one of claims 1 to 11.
